# EUROPEAN PATENT SPECIFICATION

(11) **EP 3 893 466 B1**
(45) Date of publication and mention of the grant of the patent: **20.07.2022**
(21) Application number: 20168127.7
(22) Date of filing: 06.04.2020
(51) Int. Cl.: H04L 67/00

(54) **METHOD AND SYSTEM FOR CONTROLLING CLOUD BASED SERVICES**
VERFAHREN UND SYSTEM ZUR STEUERUNG VON CLOUD-BASIERTEN DIENSTEN
PROCÉDÉ ET SYSTÈME DE COMMANDE DE SERVICES EN NUAGE

(43) Date of publication of application: 13.10.2021
(73) Proprietor: Deutsche Telekom AG, 53113 Bonn (DE)
(72) Inventor: NATHRATH, Holger, 53229 Bonn (DE)
(74) Representative: Raible Deissler Lehmann Patentanwälte PartG mbB

(56) References cited:
- CN-U- 204 440 045
- KR-A- 20170 052 446
- US-A1- 2018 376 338

## Description

### Field of the Invention

The present invention refers to a method and a system for controlling cloud based services.

It is an object of the present invention to improve the user experience of cloud based services to virtualize local computing capacities, in order to dissolve the dependency on specific devices for different use cases and to increase the sustainability with respect to electric power consumption, energy recovery and materials for manufacturing of electrical devices.

### Background

Currently, on the management and control of cloud based services which request a real time reaction on a terminal device, pose an unsolved challenge. Real time means that a reaction/response to an input signal takes place with a latency which is no longer perceived by a user as a delay.

KR 2017 0052446 A relates to a 5G network system capable of effectively providing a communication service through a high-level architecture that integrates a 4G wireless network, a wired network, a cloud and a service evolved in various fields.

CN 204 440 045 U discloses a multifunctional intelligent home system, and belongs to the technical field of home automation and wireless home security. The system comprises an intelligent center, wireless node devices, and an intelligent home cloud service platform. The wireless node devices are connected with the intelligent center through a wireless connection method. The intelligent center is connected with the intelligent home cloud service platform through a network.

US 2018/376338 A1 refers to a telecommunications network which comprises at least one core network interface for providing interconnection to a core network. At least one base station provides communications to at least one user device. At least one server defines a configurable network interconnecting at least one core network interface and the base station. The at least one server defines logically independent network slicing for the configurable network that selects a first network slice responsive to use of the configurable network by a first application and selects a second network slice responsive to use of the configurable network by a second application. The at least one server further provides a data center based cloud architecture to support the first network slice when the first application is selected and the second network slice when the second application is selected.

Each additional processing and/or each additional routing of the input signal by a further device results in a slight prolongation of the latency and, thus, in a delay of the reaction on the terminal device.

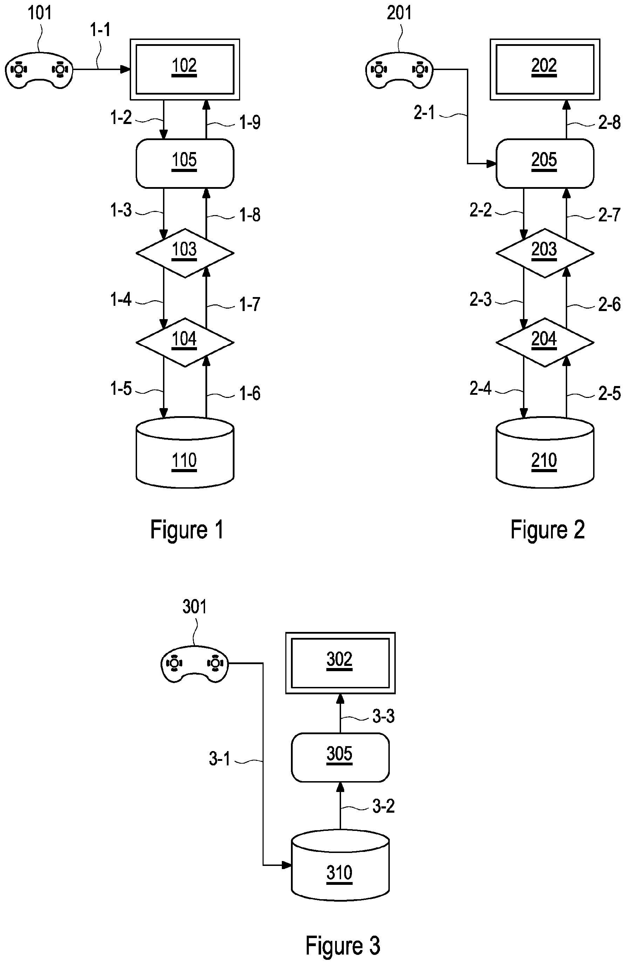

For current solutions, an input device is always connected with at least one device available on site, i.e. with at least one local device. Such local device processes the input signal and/or forwards the input signal. Each processing step leads to an increase of latency. As shown in Figure 1, the input signal is passed via a lot of hobs, within a local area, such as a house, as well as within the Internet. Modern solutions such as Google Stadia avoid a screen device coupled with the input device and lead the input signal directly from the input device to a respective router, as shown in Figure 2.

However, all existing input devices use as connection technology WLAN or Bluetooth.

### Summary of the Invention

The above mentioned object is solved by a method and a system with the features of the independent claims. Further embodiments and examples are described by the dependent claims and the description.

The present disclosure provides a method for controlling at least one cloud based service in a telecommunications network, wherein the at least one service is located and running at a network edge cloud and an input signal for controlling the at least one service is transferred via at least one physical interface of at least one input device directly to the network edge cloud using the 5G standard.

The proposed method allows to reduce a latency for a reaction of the at least one service to the input signal thus far that a real time interaction of a user (which interacts with the at least one cloud based service by means of the at least one input device) and the at least one cloud based service becomes possible. For this, the input signal for controlling the at least one service is transferred via at least one physical interface of the at least one input device directly to the network edge cloud using the 5G standard. Thus, a number of intermediate devices/stations is reduced to a minimum.

According to one possible embodiment of the proposed method, the input signal is directly processed, particularly interpreted and evaluated, by at least one processor which is running the at least one service and which is located at the network edge cloud.

According to still a further possible embodiment of the proposed method, a response signal of the at least one service to the input signal is transferred back in a data stream from the network edge cloud via a router of the telecommunications network to an output device, such as a screen device. The telecommunications network can be based on different communication technologies. It may be a wireless network or a wired network or a combination thereof. It may be a mobile network, i.e. a digital cellular network, a LAN, a WAN or a combination thereof. A communication link, i.e. a communication channel that connects two or more devices/nodes within the telecommunications network for the purpose of data/signal transmission may be a dedicated physical link or a virtual circuit that uses one or more physical links or shares a physical link with other communication links. The telecommunications network is a collection of terminal nodes in which links are connected so as to enable telecommunication between the terminals. The transmission/communication links connect the nodes together.

An essential idea of the proposed method is the combination of both: connecting a controller, i.e. the at least one input device via 5G to send a low latency input signal to the network edge cloud hosting the at least one cloud based service and then deliver a media stream of the at least one cloud based service from the network edge cloud back via any kind of network, in many cases probably fixed line access.

The at least one cloud based service may be chosen as a latency sensitive service.

According to another embodiment of the proposed method, the at least one input device is equipped with a device individual 5G interface and its own 5G connection/communication link to the network edge cloud. The terms "communication link", "connection" and "communication channel" are used synonymously herein.

The at least one input device may be realized as a digital input device or an analog device.

The at least one input device may be chosen as an analog stick, a keypad or a keyboard, a gyro sensor, a free fall sensor, a wireless optical mouse and/or a laser measurement system. An analog stick sometimes called a control stick, joystick, or thumbstick is an input device for a controller (often a game controller) that is used for two-dimensional input. A keypad is a set of buttons arranged in a block or "pad" which bear digits, symbols or alphabetical letters. A computer keyboard uses an arrangement of buttons or keys to act as mechanical levers or electronic switches. A keyboard can be used to input commands to an operating system or to a service, as in the present case. A command-line interface is a type of user interface navigated entirely using a keyboard. A game controller, or simply controller, is an input device used with video games or entertainment systems to provide input to a video game, typically to control an object or character in the game. Input devices that have been classified as game controllers include keyboards, mouses, gamepads, joysticks, etc. Special purpose devices, such as steering wheels for driving games and light guns for shooting games, are also game controllers.

The fact that the at least one cloud based service is running in the network edge cloud locates the at least one cloud based service and, thus, the compute, storage, and associated control functions needed to run the at least one cloud based service, relatively close to an end user and/or an loT endpoint. Enabling the at least one cloud based service to be localized in the network edge cloud improves network transit latency. Latency is a significant driver in improved performance and high reliability. The network edge cloud combined with the optimized latency performance of the 5G standard, i.e. the 5G air interface and the 5G core processing can reduce round-trip-time significantly, e.g. by up to two orders of magnitude compared to the current solutions as described above.

Hosting the at least one cloud based service close to a respective user, i.e. close to the input device used by the respective user, facilitates data processing at or near the source of data generation. The network edge node/cloud serves as a decentralized extension of the telecommunications network and the cloud.

The mobile communications standard 5G offers higher bandwidth compared to UMTS, LTE (Long Term Evolution), and LTE Advanced (4G). Therefore, the mobile communications, i.e. the data transfer between base station and connected device is carried out significantly quicker than on the LTE network. The combination with the network edge cloud additionally provides a significant acceleration of response times, which is particularly important for time-critical services/applications, such as self-driving transport systems and, for example, future machine controls. Due to the fact that the at least one cloud based service is located at the network edge cloud, the data analysis is transferred from a remote cloud near the at least one input device, and thus, near the respective user. Due to the direct connection between the at least one input device and the network edge cloud, the number of intermediary network components which are involved in the whole communication between the user and the service, is significantly reduced. This also reduces the transfer time (latency).

The term 5G comprises a fast wireless protocol and new, intelligent features in the telecommunications network. Thanks to intelligent network slicing technology, several virtual networks can be installed on the same physical network infrastructure. In this way, data from each service class is transferred over its own virtual mobile communications network which has been specially optimized for this service class. This stops other data streams from interfering with them and each service can be set up with the most optimal network functionality. Compared with its predecessors, 5G uses significantly broader spectra and besides the already existing mobile spectrum also spectra in the centi- and/or millimeter range. Frequencies between 6 and 100 GHz are envisaged. The interface of the at least one input device is configurable in order to be operable for different use cases, such as broad band requesting video streams and communication of a huge number of sensors, e.g. of an Internet of Things.

It is also possible to process some of the data of the at least one input signal at the network edge cloud and shift remaining data to centralized facilities. Such a hybrid solution can deliver real time fast experiences to an end user or device, and provide a flexibility to meet further requirements with centralized data storage. Some services such as video games, for example, generate significant amounts of data and require real-time computing power. Certain use cases require immediate responses to a respective input signal. With traditional networks, a device sends such data to a data center that may be hundreds of kilometres away. Data takes time to travel across large physical distances. As a result, delay can occur. With hosting the at least one cloud based service in the network edge cloud, most important (latency critical) data can be processed at the network's edge in real time, data of minor importance (less urgent data) can be sent to the cloud and processed there. For each cloud based service rules can be defined on where and how data is processed to optimize service performance and a user experience.

The combination of 5G which operates with faster speeds and lower latency, and data processing at the network edge cloud enables near real time, back- and-forth connections.

The present invention further refers to a system for controlling at least one cloud based service in a telecommunications network wherein the system comprises at least one input device which is configured to generate and send, e.g. receive an input command from a third party, e.g. an end user or a terminal device, and to convert the input command into, an input signal for controlling the at least one cloud based service, and a network edge cloud which is configured to implement and run the at least one cloud based service and to receive the input signal from the input device wherein the at least one input device comprises at least one (physical) interface wherein the at least one input device and the network edge cloud are in operative conjunction such that the input signal is transferable via the at least one (physical) interface of the at least one input device directly to the network edge cloud using the 5G standard.

According to one embodiment of the proposed system, the system further comprises at least one processor which is located at the network edge cloud and which is configured to implement and run the at least one cloud based service and to process, particularly to interpret and evaluate, the input signal and to generate a response signal.

According to still a further embodiment, the system further comprises a router and an output device wherein the response signal of the at least one cloud based service to the input signal is transferable back in a data stream from the network edge cloud via the router of the telecommunications network to the output device. The output device may be an audio output, a video output, screen/display output, and/or the like.

The cloud based service may be a latency sensitive service.

According to still a further embodiment of the proposed system the at least one input device is equipped with a device individual 5G interface and its own 5G connection to the network edge cloud. The 5G interface of the at least one input device is configurable in order to be operable for different use cases, such as for broad band requesting video streams and/or for a communication of a huge number of sensors, e.g. of an Internet of Things.

The at least one input device is realized as a digital input device and/or as an analog device. The at least one input device is chosen from the group comprising at least: an analog stick, a keypad, a keyboard, a gyro sensor, a wireless optical mouse, a laser measurement system.

The invention is further defined in the following examples. It should be understood that these examples, by indicating preferred embodiments of the invention, are given by way of illustration only. From the above discussion and the examples, one skilled in the art can ascertain the essential characteristics of this invention and without departing from the spirit and scope thereof, can make various changes and modifications of the invention to adapt it to various uses and conditions.

### Brief description of the drawings

Figure 1 schematically illustrates a first possible signal flow according to the state of the art.
Figure 2 schematically illustrates a second alternative possible signal flow according to the state of the art.
Figure 3 schematically illustrates a signal flow according to an embodiment of the proposed method.

### Detailed description of the drawings

Figure 1 schematically illustrates a first possible signal flow within a telecommunications network according to the state of the art. An input device 101 is connected with an output device 102, such as a tablet/laptop, via Bluetooth. The input device 101 operates as a kind of controller. A user (not shown here) is able to input an input command which is converted by the input device 101 into an input signal for controlling a cloud based service which is running on a central server 110 which is located in a cloud. The input signal is transferred from the input device 101 via Bluetooth, as indicated by arrow 1-1, to the output device 102. The output device 102 is connected with a router 105 of the telecommunications network, e.g. via WLAN, as indicated by arrow 1-2. The router 105 is connected with the central server 110 via a number of intermediate nodes, here called hobs. That means that the input signal is transferred from the router 105 via hob 1 103 as indicated by arrow 1-3 and hob 2 104 as indicated by arrow 1-4 to the central server 110 as indicated by arrow 1-5. In the scenario shown here, there are two hobs, namely, hob 1 103 and hob 2 104. Generally, there may be a higher number of hobs. The number of hobs depends on the physical distance between the input device 101 and the central server 110 and the infrastructure of the telecommunications network. The input signal is processed and a response signal is created in the central server 110. The response signal is then transferred back via hob 2 104, as indicated by arrow 1-6, and hob 1 103, as indicated by arrow 1-7, to the router 105, as indicated by arrow 1-8. Finally the response signal is sent from the router 105, as indicated by arrow 1-9, to the output device 102 which provides the response signal to the user. The input device 101 may be a mouse and/ or a keypad and/or combination thereof, such as used in current virtual desktop solutions. Due to the signal flow via different instances between the input device 101 and the central server 110 and between the central server 110 and the output device 102, the signals are forwarded using different protocols. Further, the output device 102 as additional forwarding instance increases the latency for the signals.

Figure 2 schematically illustrates a second alternative possible signal flow according to the state of the art. In the scenario shown here an input device 201 is directly connected, as shown by arrow 2-1, to a router 205. The connection between the input device 201 and the router 205 is realized using the local WLAN. The router 205 is connected with the central server 210 via a number of intermediate nodes, here called hobs. That means that the input signal is transferred from the router 205 via hob 1 203 as indicated by arrow 2-2 and hob 2 204 as indicated by arrow 2-3 to the central server 210 as indicated by arrow 2-4. In the scenario shown here, there are two hobs, namely, hob 1 203 and hob 2 204. Generally, there may be a higher number of hobs. The number of hobs depends on the physical distance between the input device 201 and the central server 210 and the infrastructure of the telecommunications network. The input signal is processed and a response signal is created in the central server 210. The response signal is then transferred back via hob 2 204, as indicated by arrow 2-5, and hob 1 203, as indicated by arrow 2-6, to the router 205, as indicated by arrow 2-7. Finally the response signal is sent from the router 205, as indicated by arrow 2-8, to an output device 202 which provides the response signal to the user. The input device 201 may be a stadia game controller. Due to the signal flow via different instances between the input device 201 and the central server 210 and between the central server 210 and the output device 202, the signals are forwarded using a lot of intermediate instances. Further, the router 205 as additional forwarding instance still increases the latency for the signals. No usage external to the known WLAN is possible.

Figure 3 schematically illustrates a signal flow according to an embodiment of the proposed method. Figure 3 shows an input device 301 which is configured to receive an input command from a third party (not shown) and to convert the input command into an input signal for controlling at least one cloud based service. Figure 3 further shows a network edge cloud 310 which is configured to implement and run the at least one cloud based service and to receive the input signal from the input device 301. The input device 301 comprises at least one physical interface wherein the input device 301 and the network edge cloud 310 are in operative conjunction such that the input signal is transferable via the at least one physical interface of the input device 301 directly, as indicated by arrow 3-1, to the network edge cloud 310 using the 5G standard.

At the network edge cloud 310 there is located at least one processor which is configured to implement and run the at least one cloud based service and to process, particularly to interpret and evaluate, the input signal. The at least one processor is further configured to generate a response signal.

Figure 3 further shows a router 305 and an output device 302 wherein the response signal of the at least one cloud based service to the input signal is transferable back in a data stream from the network edge cloud 310, particularly from the processor, via the router 305, as indicated by arrows 3-2 and 3-3, to the output device 302.

The cloud based service may be a latency sensitive service. The input device 301 is equipped with a device individual 5G interface and its own 5G connection to the network edge cloud 310. The input device may be realized as a digital input device or as an analog device. The input device 301 may be chosen from the group comprising at least: an analog stick, a keypad, a keyboard, a gyro sensor, a wireless optical mouse, a laser measurement system.

As can be seen from the schematic signal flow, the number of intermediate instances is reduced to a minimum. The input signal is directly processed at the network edge cloud 310, particularly by the at least one processor located there. The resulting signal, i.e. the response signal is transferred back to the output device 302 with only one intermediate instance, namely the router 305.

The direct connection of the input device 301 with the network edge cloud 310 using the 5G technology enables a location-independent interaction with the user (not shown here).

In the following two examples are described in order to emphasize the advantages of the method and system as proposed herein:
1. Two users play together a multiple player computer game, the multiple player computer game being an example to the above mentioned cloud based service. Each user has a respective game controller as respective input device 301. Both game controllers 301, that one of the first user/player and that one of the second user/player, are directly connected with the network edge cloud 310 hosting the game server/processor, respectively. The input signals, i.e. the control signals of both users reach the game server with minimized delay, respectively. Both input signals are processed in the network edge cloud 310. Thus, not only the inputlag, i.e. the delay between input and reaction on the output device 302 is minimized but also the interaction of the users can be computed and presented more exactly.
2. A user uses a virtual workspace where the operating system, such as Windows10, and all applications are cloud based operated, i.e. all applications correspond to cloud based services, and are presented as data stream on a terminal device 302. All input devices 301 of the user, such as a mouse and a keypad comprise a device individual 5G interface and connection with the network edge cloud 310. Thus, the latency is reduced and the virtual workspace becomes a location independent workstation environment with the experience of a local workstation.

The aim of a reduced latency is achieved by a direct 5G connection between the input device 301 and the network edge cloud 310. Thus, for virtual services/applications, such as gaming, workstation, rendering etc., the result is an experience that is in no way inferior to local execution. Further, the computing power is almost freely scalable. Further no additional intermediate instances are necessary, thus network resources can be saved and the network efficiency can be increased. Also the fail safety is increased.

The reduced latency allows a broader use of virtual solutions. Thus, the manufacturing of hardware with high use of energy and valuable raw materials, such as noble earths, is reduced. This accounts also for harmful substances. This results from the fact that not for every specific use case specific devices have to be provided, such as game consoles.

Due to the virtual solutions the electricity consumption and energy use can be adapted to specific needs. Further, there is control over the origin of the electricity, renewable energies can be promoted. The heat which is gained by water cooling can be dissipated and reused.

### List of reference signs

- 101: input device
- 102: output device
- 103: hob 1
- 104: hob 2
- 105: router
- 110: central server
- 1-1: arrow
- 1-2: arrow
- 1-3: arrow
- 1-4: arrow
- 1-5: arrow
- 1-6: arrow
- 1-7: arrow
- 1-8: arrow
- 1-9: arrow

- 201: input device
- 202: output device
- 203: hob 1
- 204: hob 2
- 205: router
- 210: central server
- 2-1: arrow
- 2-2: arrow
- 2-3: arrow
- 2-4: arrow
- 2-5: arrow
- 2-6: arrow
- 2-7: arrow
- 2-8: arrow
- 301: input device
- 302: output device
- 305: router
- 310: network edge cloud
- 3-1: arrow
- 3-2: arrow
- 3-3: arrow

## Claims

1. A method for controlling at least one cloud based service in a telecommunications network wherein the at least one cloud based service is located and running at a network edge cloud (310) and at least one input device (301) is equipped with a device individual 5G interface and an own 5G connection to the network edge cloud (310) said at least one input device (301) and the network edge cloud (310) being in operative conjunction such that: an input signal generated by the at least one input device (301) for controlling the at least one cloud based service is transferred (3-1) via the device individual 5G interface of the at least one input device (301) and the 5G connection of the at least one input device (310) directly to the network edge cloud (310) with no additional intermediate instances.

2. The method according to claim 1 wherein the input signal is directly processed, particularly interpreted and evaluated, by at least one processor which is running the at least one cloud based service and which is located at the network edge cloud (310).

3. The method according to claim 1 or 2, wherein a response signal of the at least one cloud based service to the input signal is transferred back (3-2, 3-3) in a data stream from the network edge cloud (310) via a router (305) of the telecommunications network to an output device (302).

4. The method according to any one of the preceding claims wherein the at least one cloud based service is chosen as a latency sensitive service.

5. The method according to any one of the preceding claims wherein the at least one input device (301) is realized as a digital input device.

6. The method according to any one of claims 1 to 4, wherein the at least one input device (301) is chosen as an analog input device, particularly as an analog stick, a keypad or a keyboard, a gyro sensor, a wireless optical mouse, a laser measurement system and/or a combination thereof.

7. A system for controlling at least one cloud based service in a telecommunications network wherein the system comprises at least one input device (301) which is configured to generate and send an input signal for controlling the at least one cloud based service, and a network edge cloud (310) which is configured to implement and run the at least one cloud based service and to receive the input signal from the input device (301) wherein the at least one input device (301) is equipped with a device individual 5G interface and an own 5G connection to the network edge cloud (310) and wherein the at least one input device (301) and the network edge cloud (310) are in operative conjunction such that the input signal is transferred via the at least one device individual 5G interface and the 5G connection of the at least one input device (301) directly to the network edge cloud (310) with no additional intermediate instances.

8. The system according to claim 7 wherein the system further comprises at least one processor which is located at the network edge cloud (310) and which is configured to implement and run the at least one cloud based service and to process, particularly to interpret and evaluate, the input signal.

9. The system according to claim 7 or 8, wherein the system further comprises a router (305) and an output device (302) wherein a response signal of the at least one cloud based service to the input signal is transferred back in a data stream from the network edge cloud (310) via the router (305) of the telecommunications network to the output device (302).

10. The system according to any one of the claims 7 to 9 wherein the at least one cloud based service is a latency sensitive service.

11. The system according to any one of the claims 7 to 10 wherein the at least one input device (301) is realized as a digital input device or as an analog device or as a combination thereof.

12. The system according to claim 11, wherein the at least one input device (301) is chosen from the group comprising at least: an analog stick, a keypad, a keyboard, a gyro sensor, a wireless optical mouse, a laser measurement system, a combination thereof.

## Patentansprüche

1. Verfahren zur Steuerung mindestens eines cloudbasierten Dienstes in einem Telekommunikationsnetz, wobei der mindestens eine cloudbasierte Dienst sich in einer Network-Edge-Cloud (310) befindet und dort ausgeführt wird, und mindestens ein Eingabegerät (301) mit einer geräteindividuellen 5G-Schnittstelle und einer eigenen 5G-Verbindung zu der Network-Edge-Cloud (310) ausgestattet ist, wobei das mindestens eine Eingabegerät (301) und die Network-Edge-Cloud (310) so in operativer Verbindung stehen, dass: ein von dem mindestens einen Eingabegerät (301) erzeugtes Eingabesignal zur Steuerung des mindestens einen cloudbasierten Dienstes über die geräteindividuelle 5G-Schnittstelle des mindestens einen Eingabegeräts (301) und die 5G-Verbindung des mindestens einen Eingabegeräts (310) direkt und ohne weitere Zwischeninstanzen an die Network Edge Cloud (310) übertragen wird (3-1).

2. Verfahren nach Anspruch 1, bei dem das Eingangssignal von mindestens einem Prozessor direkt verarbeitet, insbesondere interpretiert und ausgewertet, wird, der den mindestens einen cloudbasierten Dienst ausführt und der sich in der Network-Edge-Cloud (310) befindet.

3. Verfahren nach Anspruch 1 oder 2, wobei ein Antwortsignal des mindestens einen cloudbasierten Dienstes auf das Eingangssignal in einem Datenstrom von der Network-Edge-Cloud (310) über einen Router (305) des Telekommunikationsnetzes an ein Ausgabegerät (302) zurückübertragen wird (3-2, 3-3).

4. Verfahren nach einem der vorhergehenden Ansprüche, wobei der mindestens eine cloudbasierte Dienst als latenzempfindlicher Dienst ausgewählt wird.

5. Verfahren nach einem der vorhergehenden Ansprüche, wobei das mindestens eine Eingabegerät (301) als digitales Eingabegerät ausgeführt ist.

6. Verfahren nach einem der Ansprüche 1 bis 4, wobei das mindestens eine Eingabegerät (301) als analoges Eingabegerät, insbesondere als Analog-Stick, Keypad oder Tastatur, Gyrosensor, drahtlose optische Maus, Lasermesssystem und/oder als Kombination aus diesen ausgewählt wird.

7. System zur Steuerung mindestens eines cloudbasierten Dienstes in einem Telekommunikationsnetz, wobei das System mindestens ein Eingabegerät (301) umfasst, das so konfiguriert ist, dass es ein Eingabesignal zur Steuerung des mindestens einen cloudbasierten Dienstes erzeugt und sendet, und eine Network-Edge-Cloud (310), die so konfiguriert ist, dass sie den mindestens einen cloudbasierten Dienst implementiert und ausführt und das Eingangssignal von dem Eingabegerät (301) empfängt, wobei das mindestens eine Eingabegerät (301) mit einer geräteindividuellen 5G-Schnittstelle und einer eigenen 5G-Verbindung zur Network-Edge-Cloud (310) ausgestattet ist und wobei das mindestens eine Eingabegerät (301) und die Network-Edge-Cloud (310) so in operativer Verbindung stehen, dass das Eingangssignal über die mindestens eine geräteindividuelle 5G-Schnittstelle und die 5G-Verbindung des mindestens einen Eingabegeräts (301) direkt und ohne weitere Zwischeninstanzen an die Network-Edge-Cloud (310) übertragen wird.

8. System nach Anspruch 7, wobei das System des Weiteren mindestens einen Prozessor umfasst, der sich in der Network-Edge-Cloud (310) befindet und der konfiguriert ist, den mindestens einen cloudbasierten Dienst zu implementieren und auszuführen und das Eingangssignal zu verarbeiten, insbesondere zu interpretieren und auszuwerten.

9. System nach Anspruch 7 oder 8, wobei das System des Weiteren einen Router (305) und ein Ausgabegerät (302) umfasst, wobei ein Antwortsignal des mindestens einen cloudbasierten Dienstes auf das Eingangssignal in einem Datenstrom von der Network-Edge-Cloud (310) über den Router (305) des Telekommunikationsnetzes zurück an das Ausgabegerät (302) übertragen wird.

10. System nach einem der Ansprüche 7 bis 9, wobei der mindestens eine cloudbasierte Dienst ein latenzempfindlicher Dienst ist.

11. System nach einem der Ansprüche 7 bis 10, wobei das mindestens eine Eingabegerät (301) als digitales Eingabegerät oder als analoges Gerät oder als eine Kombination aus diesen ausgeführt ist.

12. System nach Anspruch 11, wobei das mindestens eine Eingabegerät (301) ausgewählt ist aus der Gruppe, die mindestens Folgendes umfasst: einen Analog-Stick, ein Keypad, eine Tastatur, einen Gyrosensor, eine drahtlose optische Maus, ein Lasermesssystem, eine Kombination aus diesen.

## Revendications

1. Procédé pour commander au moins un service basé sur le nuage dans un réseau de télécommunications, l'au moins un service basé sur le nuage étant situé et exécuté au niveau d'un nuage de périphérie de réseau (310) et au moins un dispositif d'entrée (301) étant équipé d'une interface 5G spécifique au dispositif et d'une connexion 5G propre au nuage de périphérie de réseau (310), ledit au moins un dispositif d'entrée (301) et le nuage de périphérie de réseau (310) étant en association opérante de sorte que : un signal d'entrée généré par l'au moins un dispositif d'entrée (301) pour commander l'au moins un service basé sur le nuage soit transféré (3-1) par l'intermédiaire de l'interface 5G propre au dispositif de l'au moins un dispositif d'entrée (301) et de la connexion 5G de l'au moins un dispositif d'entrée (310) directement au nuage de périphérie de réseau (310) sans instances intermédiaires supplémentaires.

2. Procédé selon la revendication 1, le signal d'entrée étant traité directement, interprété et évalué particulièrement, par au moins un processeur qui exécute l'au moins un service basé sur le nuage et qui est situé dans le nuage de périphérie de réseau (310).

3. Procédé selon la revendication 1 ou 2, un signal de réponse de l'au moins un service basé sur le nuage au signal d'entrée étant retransféré (3-2, 3-3) dans un flux de données depuis le nuage de périphérie de réseau (310) par l'intermédiaire d'un routeur (305) du réseau de télécommunications au dispositif de sortie (302).

4. Procédé selon l'une quelconque des revendications précédentes, l'au moins un service basé sur le nuage étant choisi en tant que service sensible à la latence.

5. Procédé selon l'une quelconque des revendications précédentes, l'au moins un dispositif d'entrée (301) étant réalisé en tant que dispositif d'entrée numérique.

6. Procédé selon l'une quelconque des revendications 1 à 4, l'au moins un dispositif d'entrée (301) étant choisi en tant que dispositif d'entrée analogique, particulièrement en tant que manette analogique, pavé ou clavier, capteur gyroscopique, souris optique sans fil, système de mesure laser et/ou combinaison de ceux-ci.

7. Système pour commander au moins un service basé sur le nuage dans un réseau de télécommunications, le système comprenant au moins un dispositif d'entrée (301) qui est configuré pour générer et envoyer un signal d'entrée pour commander l'au moins un service basé sur le nuage, et un nuage de périphérie de réseau (310) qui est configuré pour mettre en œuvre et exécuter l'au moins un service basé sur le nuage et pour recevoir le signal d'entrée depuis le dispositif d'entrée (301), l'au moins un dispositif d'entrée (301) étant équipé d'une interface 5G spécifique au dispositif et d'une connexion 5G propre au nuage de périphérie de réseau (310) et l'au moins un dispositif d'entrée (301) et le nuage de périphérie de réseau (310) étant en association opérante de sorte que le signal d'entrée soit transféré par l'intermédiaire de l'au moins une interface 5G spécifique au dispositif et de la connexion 5G de l'au moins un dispositif d'entrée (301) directement au nuage de périphérie de réseau (310) sans instances intermédiaires supplémentaires.

8. Système selon la revendication 7, le système comprenant en outre au moins un processeur qui est situé dans le nuage de périphérie de réseau (310) et qui est configuré pour mettre en œuvre et exécuter l'au moins un service basé sur le nuage et pour traiter, particulièrement pour interpréter et évaluer le signal d'entrée.

9. Système selon la revendication 7 ou 8, le système comprenant en outre un routeur (305) et un dispositif de sortie (302), un signal de réponse de l'au moins un service basé sur le nuage au signal d'entrée étant retransféré dans un flux de données depuis le nuage de périphérie de réseau (310) par l'intermédiaire du routeur (305) du réseau de télécommunications au dispositif de sortie (302).

10. Système selon l'une quelconque des revendications 7 à 9, l'au moins un service basé sur le nuage étant un service sensible à la latence.

11. Système selon l'une quelconque des revendications 7 à 10, l'au moins un dispositif d'entrée (301) étant réalisé en tant que dispositif d'entrée numérique ou dispositif analogique ou combinaison de ceux-ci.

12. Système selon la quelconque 11, l'au moins un dispositif d'entrée (301) étant choisi dans le groupe comprenant au moins : une manette analogique, un pavé, un clavier, un capteur gyroscopique, une souris optique sans fil, un système de mesure laser, une combinaison de ceux-ci.
